# EUROPÄISCHE PATENTANMELDUNG

(11) **EP 3 872 243 A1**
(43) Veröffentlichungstag der Anmeldung: **01.09.2021**
(21) Anmeldenummer: 20160103.6
(22) Anmeldetag: 28.02.2020
(51) Int. Cl.: D03D 1/00, B65G 15/34, D03D 3/04

(54) **FLACHRIEMENBAND, DARAUS GEBILDETER ENDLOSER FLACHRIEMEN UND VERFAHREN ZUR HERSTELLUNG DES FLACHRIEMENBANDES**

(71) Anmelder: Ammeraal Beltech AG, 8645 Jona (CH)
(72) Erfinder: Lefèvre, Jérôme Patrice, 8603 Schwerzenbach (CH)
(74) Vertreter: Schmauder & Partner AG Patent- & Markenanwälte VSP

(57) **Zusammenfassung**

Ein Flachriemenband mit gegenüberliegenden, verbindbaren Endabschnitten zur Bildung eines endlosen Flachriemens umfasst eine Zugschicht (B) und optional eine obere Deckschicht (A1) und/oder eine untere Deckschicht (A2), wobei die Zugschicht aus in einer Verbindungsmatrix eingebetteten Kettfäden in Längsrichtung (L) des Flachriemenbandes und optional aus Stabilisierungsfäden in Querrichtung des Flachriemenbandes gebildet ist und wobei die Verbindungsmatrix aus einem thermoplastischen Copolymer gebildet ist. Erfindungsgemäss liegen die Kettfäden als mindestens eine Unidirektionallage von im wesentlichen parallelen, unverzwirnten Kettfilamenten vor, wobei die einzelnen Filamente einen Durchmesser von 50 bis 150 µm insbesondere von 60 bis 95 µm aufweisen.

## Beschreibung

### Technisches Gebiet

Die Erfindung betrifft ein Flachriemenband gemäss Oberbegriff des Anspruchs 1 sowie ein daraus gebildeter endloser Flachriemen und ein Verfahren zur Herstellung des Flachriemenbandes.

### Stand der Technik

Riemen werden heute in den verschiedensten Ausführungsformen in sämtlichen Gebieten der Technik eingesetzt. Als "Riemen" soll hier ein geometrisch geschlossenes, d.h. endloses Objekt verstanden werden; demgegenüber soll "Riemenband" einen entsprechenden offenen Abschnitt, d.h. ein zweiendiges Objekt bezeichnen. In manchen Anwendungsfällen werden Flachriemen verwendet, welche ein im wesentlichen rechteckförmiges Querprofil aufweisen.

Bei einer häufig eingesetzten Form von Flachriemen ist dieser mehrschichtig ausgebildet, wobei die hauptsächliche mechanische Beanspruchung durch eine Zugschicht übernommen wird, die sich zwischen zwei Aussenschichten befindet. In der Regel ist mindestens eine der Aussenschichten als Laufschicht ausgestaltet. Grundsätzlich sind solche mehrschichtigen Flachriemen schon sehr lange bekannt, siehe beispielsweise DE 739713 C. Die Materialwahl richtet sich primär nach dem Anwendungsbereich und hat insbesondere die mechanischen Vorgaben zu erfüllen.

Die Verbindung der beiden Enden eines Flachriemenbandes zur Bildung eines endlosen Flachriemens ist allein schon deshalb anspruchsvoll, weil auch dort die gewünschte mechanische Belastbarkeit, insbesondere Zugfestigkeit, aber auch die für die Laufschicht geforderten Eigenschaften gewährleistet werden muss. Bei einer weit verbreiteten Klasse von Flachriemen ist die Zugschicht durch ein Gewebe, beispielsweise durch ein Polyestergewebe gebildet, welches vorzugsweise mit einem Haftvermittler belegt ist. Als Aussenschichten werden mit Vorteil hochwertige Elastomere mit guten Haft- und Uniformitätseigenschaften verwendet. Das Polyestergewebe der Zugschicht ist in einer Matrix aus einem thermoplastischen Copolymer eingebettet, welches unter anderem zur Bildung einer Verbindung der beiden endständigen Bandabschnitte dient.

Die EP 2811200 A2 beschreibt ein Verfahren zur Fertigung eines Polyurethanriemens, insbesondere eines Zahnriemens, welcher einen im Riemenkörper eingebetteten Zugträger umfasst. Die dort beschriebenen Zugtäger sind als sog. "Cords" ausgebildet, welche aus einer Helix von wenigstens fünf, insbesondere aus 10 bis 20 Litzen bestehen. Die einzelnen Litzen sind aus einer Gruppe von typischerweise 100 bis 1000 Filamenten gebildet. Bekanntlich sind Litzen und Cords immer aus verzwirnten Filamenten aufgebaut. Als wesentlichen Aspekt der verwendeten Cordkonstruktion sind die darin befindlichen Hohlräume erwähnt, die im Rahmen der Riemenherstellung zumindest teilweise mit Polyurethan ausgefüllt werden.

Trotz der hervorragenden Eigenschaften der heute bekannten Flachriemen bzw. Flachriemenbänder besteht weiterhin ein Bedarf nach verbesserten Ausführungen. Insbesondere wäre es erwünscht, ein Flachriemenband bzw. einen daraus gefertigten Flachriemen bereitzustellen, bei dem eine vorgegebene Zugfestigkeit oder weitere mechanische Eigenschaft bei gleichzeitig verringertem Energieverlust beim Betrieb des Flachriemens erreicht wird.

### Darstellung der Erfindung

Gelöst wird die obige Aufgabe und auch weitere Aufgaben durch das im Anspruch 1 definierte Flachriemenband, durch den im Anspruch 12 definierten endlosen Flachriemen sowie durch das im Anspruch 15 definierte Herstellungsverfahren. Gemäss einem ersten Aspekt der Erfindung wird ein Flachriemenband mit gegenüberliegenden, verbindbaren Endabschnitten zur Bildung eines endlosen Flachriemens bereitgestellt, wobei das Flachriemenband eine Zugschicht (B) und optional eine obere Deckschicht (A1) und/oder eine untere Deckschicht (A2) umfasst, wobei die Zugschicht aus in einer Verbindungsmatrix eingebetteten Kettfäden in Längsrichtung (L) des Flachriemenbandes und optional aus Stabilisierungsfäden in Querrichtung des Flachriemenbandes gebildet ist, und wobei die Verbindungsmatrix aus einem thermoplastischen Copolymer gebildet ist. Dadurch, dass die Kettfäden als mindestens eine Unidirektionallage von im wesentlichen parallelen, unverzwirnten Kettfilamenten vorliegen, wobei die einzelnen Filamente einen Durchmesser von 50 bis 150 µm, insbesondere von 60 bis 95 µm aufweisen, ergibt sich überraschenderweise ein Flachriemenband mit verbesserten Eigenschaften.

Es wurde insbesondere gefunden, dass sich durch Ausbildung der Zugschicht aus einer oder ggf. mehreren Unidirektionallagen von im wesentlichen parallelen, unverzwirnten Filamenten ein vergleichsweise dünnes Flachriemenband herstellen lässt. Als Folge davon lässt sich der Reibungsverlust beim Betrieb des Flachriemens in höchst erwünschter Weise reduzieren.

"Unidirektional" heisst im vorliegenden Zusammenhang, dass die betreffenden Filamente im Rahmen der üblichen Materialeigenschaften im wesentlichen parallel ausgerichtet sind. Mit "im wesentlichen parallel" soll ausgedrückt werden, dass unvermeidbare bzw. sogar erwartete Abweichungen von einer strengen Parallelität im geometrischen Sinn, beispielsweise durch lokale Verbiegung und Verformung, nicht aus dem erwähnten Begriff der Unidirektionalität herausführen.

Die Zugschicht umfasst zwar mindestens eine Unidirektionallage von im wesentlichen parallelen, unverzwirnten Filamenten in Längsrichtung des Treibriemenbandes und namentlich keine gewobene Lage, aber dennoch können optional Stabilisierungsfäden in Querrichtung des Flachriemenbandes anwesend sein.

Vorteilhafte Ausführungsformen sind in den abhängigen Ansprüchen definiert.

Grundsätzlich kann die Zugschicht aus einer einzelnen Unidirektionallage von Kettfilamenten gebildet sein. In einer vorteilhaften Ausführungsform (Anspruch 2), die insbesondere für erhöhte Zugbelastbarkeit vorgesehen ist, liegen die Kettfilamente als mehrere aufeinander gestapelte Lagen vor.

Gemäss einer weiteren Ausführungsform (Anspruch 3) ist das thermoplastische Copolymer der Verbindungsmatrix ausgewählt aus:
- Copolymer auf Polyamidbasis, beispielsweise ein Polyether-b-Amid (Pebax™)
- Polyurethan Copolymer auf Polyesterbasis
- Polyurethan Copolymer auf Polyetherbasis
- Copolymer auf Polyesterbasis wie Polyethylentherephthalat und Polybutylentherephthalat (PBT).

Für manche Anwendungen ist es vorteilhaft, die Zugschicht mit Stabilisierungsfäden in Querrichtung des Flachriemenbandes auszustatten. Gemäss einer Ausführungsform (Anspruch 4) sind die Stabilisierungsfäden als einzelne Schussfäden ausgestaltet, welche in grundsätzlich bekannter Weise durch einen entsprechenden Fadenleger eingebracht werden. Als Beispiel für eine verwendbare Vorrichtung sei die Gelegemaschine "Turbotex" von ontec automation GmbH, Naila (DE) erwähnt.

Gemäss einer weiteren Ausführungsform (Anspruch 5), liegen die Stabilisierungsfäden als oberhalb und/oder unterhalb der Kettfilamente angeordnete Unidirektionallage von im wesentlichen parallelen, unverzwirnten Stabilisierungsfilamenten vor. Als weitere Möglichkeit können Bändchen von unidirektionalen Filamenten (auch als "Tapes" bezeichnet) ggf. in verschiedenen Winkeln quer gelegt und entsprechend zugeschnitten werden. Insbesondere können hierfür vorgespreizte trockene unidirektionale Faserbänder eingesetzt werden (siehe beispielsweise COP MAX 5 von Karl Mayer).

Grundsätzlich können die Kettfilamente der Zugschicht aus verschiedenen Materialien gewählt werden. In Frage kommen beispielsweise Filamente aus Polyolefinen (Polyethylen, Polypropylen), aus flüssigkristallinem Polymer (lyotropisches flüssigkristallines Polymer, thermotropisches flüssigkristallines Polymer, wobei das Polymer ein Polyaramid, beispielsweise p-Phenylenterephthalamid ist), aber auch bioabbaubare Polymere aus Cellulose oder Cellulose-Derivaten. Die genannten Polymere sind kommerziell erhältlich unter den folgenden Markennamen: Kevlar™, Twaron™, Vectra™, M5™, Zylon™.

Gemäss einer vorteilhaften Ausführungsform (Anspruch 6) sind die Kettfilamente der Zugschicht aus einem Polyester gebildet. Vorzugsweise (Anspruch 7), handelt es sich dabei um einen Copolyester, insbesondere um Poly(4-Hydroxybenzoesäure-co-6-Hydroxy-2-naphthoesäure) Copolymer.

Gemäss einer weiteren Ausführungsform (Anspruch 8), sind die Kettfilamente aus einer Polymermischung (Blend) der oben genannten Materialien gebildet. Zudem können sie ein oder mehrere Additive, Füllmittel, Haftvermittler, Farbpigmente, Antioxidantien, Monomere, Weichmacher und dergleichen enthalten. Als Haftvermittler kann ein thermoplastisch oder reaktives Vernetzersystem auf Lösemittelbasis oder wasserbasiert vorgesehen werden.

Gemäss einer vorteilhaften Ausführungsform (Anspruch 9) umfasst das Flachriemenband eine obere Deckschicht und/oder eine untere Deckschicht, die aus einem Elastomer gebildet ist bzw. sind, wobei die Zugschicht einschliesslich Verbindungsmatrix einen Anteil von höchstens 50%, vorzugsweise höchstens 40%, der Gesamtdicke des Flachriemenbandes ausmacht. Grundsätzlich können obere und untere Deckschicht unterschiedlich ausgestaltet sein, wobei in der Regel zumindest eine der Deckschichten als Laufschicht ausgestaltet ist. Gemäss einer Ausführungsform (Anspruch 10) sind obere und untere Deckschicht im wesentlichen identisch.

Auch das Elastomer der einen bzw. der beiden Deckschichten ist entsprechend der vorgesehenen Anwendung zu wählen. Gemäss einer Ausführungsform (Anspruch 11), ist das Elastomer der Deckschicht(en) unabhängig ausgewählt aus: Nitril-Kautschuk, Chloropren-Kautschuk, thermoplastisches Elastomer wie Thermolast™ und walzbarer Polyurethan-Kautschuk.

Gemäss einem weiteren Aspekt der Erfindung wird ein endloser Flachriemen bereitgestellt, welcher durch Verbindung der Endabschnitte eines erfindungsgemässen Flachriemens gebildet ist. Die Bildung derartiger Verbindungen ist grundsätzlich bekannt. Gemäss einer Ausführungsform (Anspruch 13), wird dabei eine gezahnte Verbindung, auch als "Fingerverbindung" bezeichnet, gebildet. Dabei werden die zu verbindenden Enden mit einer Zickzackform gestanzt, damit sie passend zusammengeschoben werden können. Die Zacken ("Finger") können verschiedene Längen, insbesondere ca. 30 bis 120 mm sowie unterschiedliche Breiten aufweisen. In einem nächsten Schritt wird die zusammengeschobene Stelle mit einer Heizpresse über den Schmelzpunkt des Kernmaterials erhitzt, verschmolzen und kontrolliert abgekühlt.

Vorzugsweise (Anspruch 14), erfolgt die gegenseitige Fixierung der Endabschnitte durch thermische Einwirkung oder durch Verkleben.

Gemäss noch einem Aspekt der Erfindung wird ein Verfahren zur Herstellung eines erfindungsgemässen Flachriemens angegeben, wobei die Zugschicht sowie die untere Deckschicht und/oder obere Deckschicht kontinuierlich zusammengeführt und miteinander verpresst werden. Dadurch, dass jede Unidirektionallage der Zugschicht als ein mit im wesentlichen parallelen, unverzwirnten Filamenten bestücktes Transferband zugeführt wird, ergibt sich eine vergleichsweise einfache und wirtschaftliche Herstellungsweise.

### Kurze Beschreibung der Zeichnungen

Ausführungsbeispiele der Erfindung werden nachfolgend anhand der Zeichnungen näher beschrieben, dabei zeigen:
- Fig. 1: ein aus dem Stand der Technik bekanntes Flachriemenband, in perspektivischer Darstellung;
- Fig. 2: ein erstes erfindungsgemässes Flachriemenband, in perspektivischer Darstellung;
- Fig. 3: ein zweites erfindungsgemässes Flachriemenband, in perspektivischer Darstellung; und
- Fig. 4: eine Zugschicht eines dritten erfindungsgemässen Flachriemenband, in Draufsicht.

### Wege zur Ausführung der Erfindung

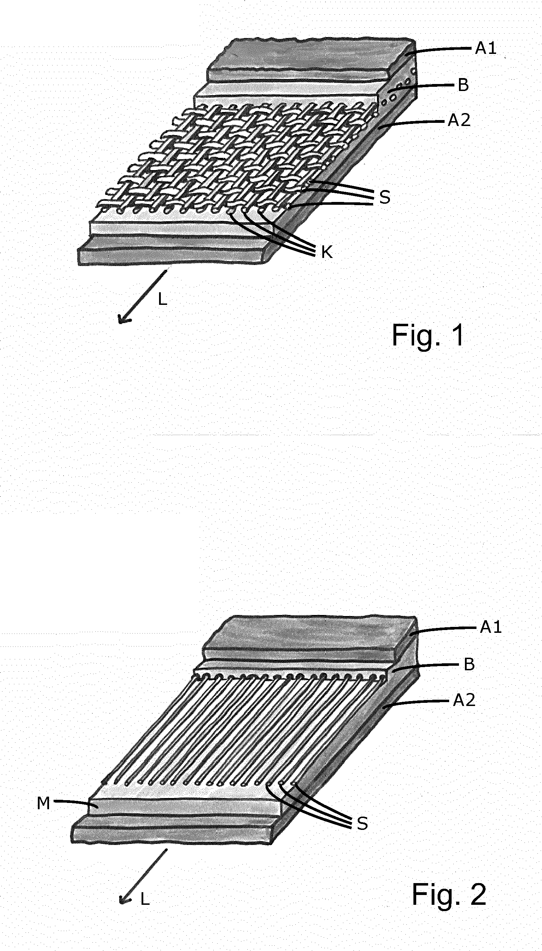

Das in der Fig. 1 dargestellte, vorbekannte Flachriemenband umfasst eine obere Deckschicht A1, eine untere Deckschicht A2 und eine dazwischen angeordnete Zugschicht B. Im gezeigten Fall wird die Zugschicht durch eine Gewebelage gebildet. Die Gewebelage weist in Längsrichtung L verlaufende Kettfäden K und quer dazu verlaufende Schussfäden S.

Das in der Fig. 2 dargestellte Flachriemenband gemäss einem ersten Ausführungsbeispiel umfasst ebenfalls eine obere Deckschicht A1, eine untere Deckschicht A2 und eine dazwischen angeordnete Zugschicht B. In diesem Fall wird die Zugschicht durch eine in einer Verbindungsmatrix M eingebettete Kettfilamente K in Längsrichtung L des Flachriemenbandes.

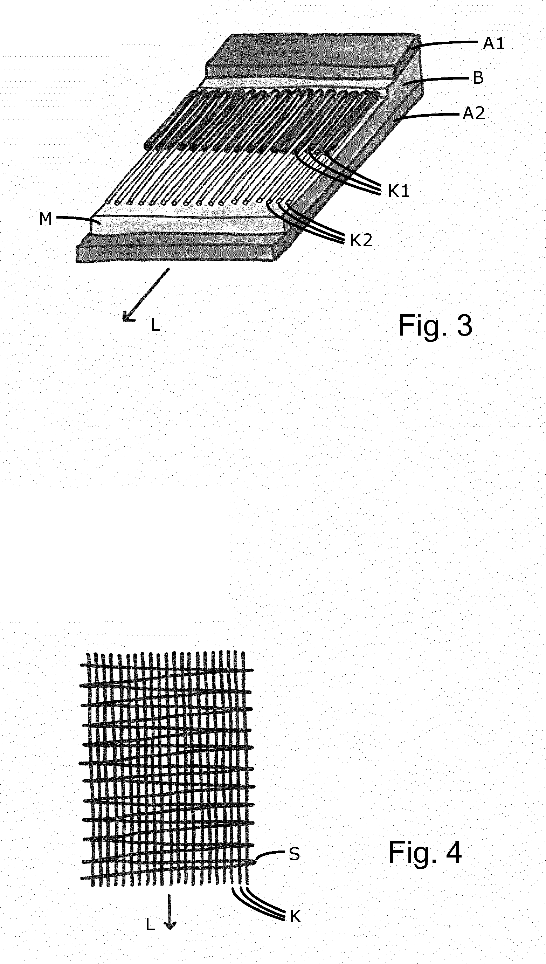

Beim Ausführungsbeispiel der Fig. 3 umfasst die Zugschicht B zwei aufeinander gestapelte Lagen K1 und K2 von Kettfilamenten.

Die Fig. 4 zeigt eine Zugschicht eines dritten erfindungsgemässen Flachriemenbandes, welche neben einer Lage von Kettfilamenten K durch einen transversal verlaufenden Schussfaden S gebildet wird.

### Beispiel:

Zwei Lagen mit je einem Flächengewicht von 25 g/m² imprägnierte Kettfilamente aus Polyester wurden in einem Laminator thermisch zwischen zwei Folien, bestehend aus thermoplastischem Polyesterbasiertem Polyurethanpolymer eingebettet. In einem weiteren Schritt wurden zwei Lagen NBR Elastomer mit einer Dicke von 0.35 mm aufgebracht. Der produzierte Flachriemen hatte eine Enddicke von 1.5 mm.

Die hergestellten Flachriemen zeigen die in der folgenden Tabelle zusammengefassten mechanischen Eigenschaften im Vergleich zu einem Standardprodukt, welches auf herkömmliche Weise mit einem gewobenen Zugträger hergestellt wurde:
Der Vergleich zeigt, dass der erfindungsgemässe Riemen bei vergleichbarer Dicke und einem um mehr als die Hälfte geringeren Flächengewicht des Zugträgers höhere mechanische Eigenschaften erreicht. Ausserordentliche Verbesserungen der dynamischen Eigenschaften zeigen sich im Vergleich des zyklischen Relaxationstests, welcher einen um rund 40% geringeren Kraftabfall ergibt.

| **Eigenschaft [Norm]** | **Erfindungsgemässer Riemen [Einheit]** | **Riemen Stand der Technik (Typ GG E05.14 FFQ) [Einheit]** |
|---|---|---|
| E-Modul [DIN ISO 21180] | 877 [N/mm²] | 428 [N/mm²] |
| K1% [DIN ISO 21180] | 13.07 [N/mm] | 6.02 [N/mm] |
| Festigkeit [DIN ISO 21180] | 43 [N/mm²] | 36 [N/mm²] |
| Flächengewicht Zugträger | 50 [g/m²] | 125 [g/m²] |
| Dicke | 1.53 [mm] | 1.41 [mm] |
| Zyklische Relaxation Kraftabfall [DIN EN ISO 21181] | 6 [%] | 49 [%] |

## Patentansprüche

1. Flachriemenband, mit gegenüberliegenden, verbindbaren Endabschnitten zur Bildung eines endlosen Flachriemens, wobei das Flachriemenband eine Zugschicht (B) und optional eine obere Deckschicht (A1) und/oder eine untere Deckschicht (A2) umfasst, wobei die Zugschicht aus in einer Verbindungsmatrix eingebetteten Kettfäden in Längsrichtung (L) des Flachriemenbandes und optional aus Stabilisierungsfäden in Querrichtung des Flachriemenbandes gebildet ist, und wobei die Verbindungsmatrix aus einem thermoplastischen Copolymer gebildet ist, **dadurch gekennzeichnet, dass** die Kettfäden als mindestens eine Unidirektionallage von im wesentlichen parallelen, unverzwirnten Kettfilamenten vorliegen, wobei die einzelnen Filamente einen Durchmesser von 50 bis 150 µm, insbesondere von 60 bis 95 µm aufweisen.

2. Flachriemenband nach Anspruch 1, wobei die Kettfilamente als mehrere aufeinander gestapelte Lagen vorliegen.

3. Flachriemenband nach Anspruch 1 oder 2, wobei das thermoplastische Copolymer der Verbindungsmatrix ausgewählt ist aus:
- Copolymer auf Polyamidbasis
- Polyurethan Copolymer auf Polyesterbasis
- Polyurethan Copolymer auf Polyetherbasis
- Copolymer auf Polyesterbasis.

4. Flachriemenband nach einem der Ansprüche 1 bis 3, mit Stabilisierungsfäden in Querrichtung des Flachriemenbandes, wobei die Stabilisierungsfäden als einzelne Schussfäden ausgestaltet sind.

5. Flachriemenband nach einem der Ansprüche 1 bis 3, mit Stabilisierungsfäden in Querrichtung des Flachriemenbandes, wobei die Stabilisierungsfäden als oberhalb und/oder unterhalb der Kettfilamente angeordnete Unidirektionallage von im wesentlichen parallelen, unverzwirnten Stabilisierungsfilamenten vorliegen.

6. Flachriemenband nach einem der Ansprüche 1 bis 5, wobei die Kettfilamente der Zugschicht aus einem Polyester gebildet sind.

7. Flachriemenband nach Anspruch 6, wobei der Polyester ein Copolyester, insbesondere Poly(4-Hydroxybenzoesäure-co-6-Hydroxy-2-naphthoesäure) Copolymer ist.

8. Flachriemenband nach Anspruch 6 oder 7, wobei die Kettfilamente aus einer Polymermischung gebildet sind.

9. Flachriemenband nach einem der Ansprüche 1 bis 8, mit einer oberen Deckschicht und/oder einer unteren Deckschicht, die aus einem Elastomer gebildet ist bzw. sind, wobei die Zugschicht einschliesslich Verbindungsmatrix einen Anteil von höchstens 50%, vorzugsweise höchstens 40%, der Gesamtdicke des Flachriemenbandes ausmacht.

10. Flachriemenband nach Anspruch 9, mit einer oberen und einer unteren Deckschicht, welche im wesentlichen identisch sind.

11. Flachriemenband nach Anspruch 9 oder 10, wobei das Elastomer der Deckschicht(en) unabhängig ausgewählt ist aus: Nitril-Kautschuk, Chloropren-Kautschuk, thermoplastischem **El**astomer und walzbarem Polyurethan-Kautschuk.

12. Endloser Flachriemen, gebildet durch Verbindung der Endabschnitte eines Flachriemens nach einem der Ansprüche 1 bis 11.

13. Endloser Flachriemen nach Anspruch 12, wobei die Verbindung der Endabschnitte als verzahnte Verbindung geformt ist.

14. Endloser Flachriemen nach Anspruch 12 oder 13, wobei die Endabschnitte thermisch oder durch Verkleben verbunden sind.

15. Verfahren zur Herstellung eines Flachriemens nach Anspruch 9 oder 10, wobei die Zugschicht sowie die untere Deckschicht und/oder obere Deckschicht kontinuierlich zusammengeführt und miteinander verpresst werden, **dadurch gekennzeichnet, dass** jede Unidirektionallage der Zugschicht als ein mit im wesentlichen parallelen, unverzwirnten Filamenten bestücktes Transferband zugeführt wird, wobei die einzelnen Filamente einen Durchmesser von 50 bis 150 µm, insbesondere von 60 bis 95 µm aufweisen.
